# EUROPEAN PATENT SPECIFICATION

(11) **EP 3 862 103 B1**
(45) Date of publication and mention of the grant of the patent: **22.11.2023**
(21) Application number: 21152100.0
(22) Date of filing: 18.01.2021
(51) Int. Cl.: B08B 3/02

(54) **PRESSURE WASHER**
HOCHDRUCKREINIGER
NETTOYEUR HAUTE PRESSION

(30) Priority: 10.02.2020 IT 202000002509
(43) Date of publication of application: 11.08.2021
(73) Proprietor: Annovi Reverberi S.p.A., 41122 Modena (IT)
(72) Inventor: CASALGRANDI, Alessandro, 41125 MODENA (IT)
(74) Representative: Corradini, Corrado

(56) References cited:
- EP-A1- 2 985 083
- EP-A1- 3 320 989
- EP-A2- 1 060 800
- WO-A1-2018/140753
- CN-U- 204 672 602
- ES-U- 1 075 101
- US-A1- 2010 243 086
- US-A1- 2017 122 304
- US-B2- 10 130 962

## Description

### TECHNICAL FIELD

The present invention relates to a pressure washer, that is a high-pressure washing device, for cleaning surfaces by generating a jet of liquid under pressure.

### PRIOR ART

As is known, high pressure washing devices, or pressure washers, comprise a high pressure pump suitable for drawing a washing fluid, for example water, whose delivery duct is connected to a flexible hose connected to a dispensing gun of pressurised liquid. The dispensing gun generally comprises an elongated body equipped with a handle to which a dispensing wand supporting a dispensing nozzle at the free end thereof can be removably associated.

The dispensing gun then comprises a trigger which is placed at the handle and actuates a tap adapted to allow or interrupt the flow of the washing fluid from the pump to the dispensing nozzle.

The fluid sent to the gun is placed under pressure by a motor pump, that is a pump to which an electric motor is mechanically connected with the aim of supplying the pump with the mechanical energy to pressurise the fluid.

A known type of pressure washers, disclosed in EP3320989, comprises two motor pumps, connected in parallel to one another to an inlet duct of the liquid to be pressurised and to the delivery duct, and a manual selection device, for example fixed to a casing containing the two motor pumps, adapted to selectively allow the actuation of one or both of the motor pumps. This configuration allows to increase the pressure and/or the flow rate of pressurised liquid that passes through the delivery duct with a simple control electronics, with a few components and therefore particularly robust as the number of components and the complexity thereof are smaller, consequently the possibility of malfunctions is lower.

The object of the present invention is to improve the versatility and speed of use of said pressure washers, all within the framework of a simple, rational and robust construction solution.

Such object is achieved by the features of the invention indicated in the independent claim. The dependent claims outline preferred and/or particularly advantageous aspects of the invention.

### DISCLOSURE OF THE INVENTION

The invention, particularly, makes available a pressure washer according to claims 1 or 6.

Thanks to this solution, a pressure washer is made available that allows the switching between different levels of pressure/flow rate, without having to interrupt the work as the switching can be carried out comfortably while holding the dispensing gun and which is at the same time particularly robust as it requires a reduced number of control components, therefore the possibility of malfunctions is reduced.

An aspect of the invention provides that the electronic control apparatus is configured, when the first manual selection device is in the other position between the second position and the third position, to keep the first electric motor and the second electric motor in the operating condition between turned on and off, determined by the first manual selection device irrespective of whether the receiver device intercepts the predetermined wireless signal indicative of the presence of the second manual selection device in the second position.

The pressure washer thus configured prevents unwanted pressure variations due to accidental switching of the second selection device with respect to what the operator initially decided by setting the first manual selection device in a condition that he does not want to vary.

According to another aspect of the invention, the electronic control apparatus can comprise an electronic control unit operatively connected to the receiver device, and a switch operatively connected to the electronic control unit and able to be actuated by said electronic control unit upon receiving the signal from the second manual selection device between a first position, in which the switch is closed and allows the second motor to be turned on, and a second position, in which the switch is open and prevents the second motor from being turned on.

Thanks to this solution, the pressure washer is particularly robust and reliable as the control of the supply of the motors is carried out by means of a few and not complex components and also because when the complexity of a system increases, the possibility that it can be subject to malfunctions increases.

For example, the switch comprises a first electrical connector, a second electrical connector and an electrically conductive connection element able to be actuated between a first position, in which it allows the passage of an electric current between the first electrical connector and the second electrical connector, and a second position, in which it prevents the passage of an electric current between the first electrical connector and the second electrical connector.

According to another aspect of the invention, the pressure washer can comprise an electric power supply line for the first motor equipped with a first electric power supply cable and a second power supply cable that electrically connect the first selection device to the first motor, and an electric power supply line of the second motor equipped with a first electric power supply cable and a second electric power supply cable that electrically connects the first selection device to the second motor and are independent from one another, and in which the switch of the electronic control apparatus has the first electrical connector electrically connected to the second power supply cable of the second motor and the second electrical connector electrically connected to the second power supply cable of the first motor.

This aspect contributes to improving the robustness of the pressure washer for the same reasons explained above.

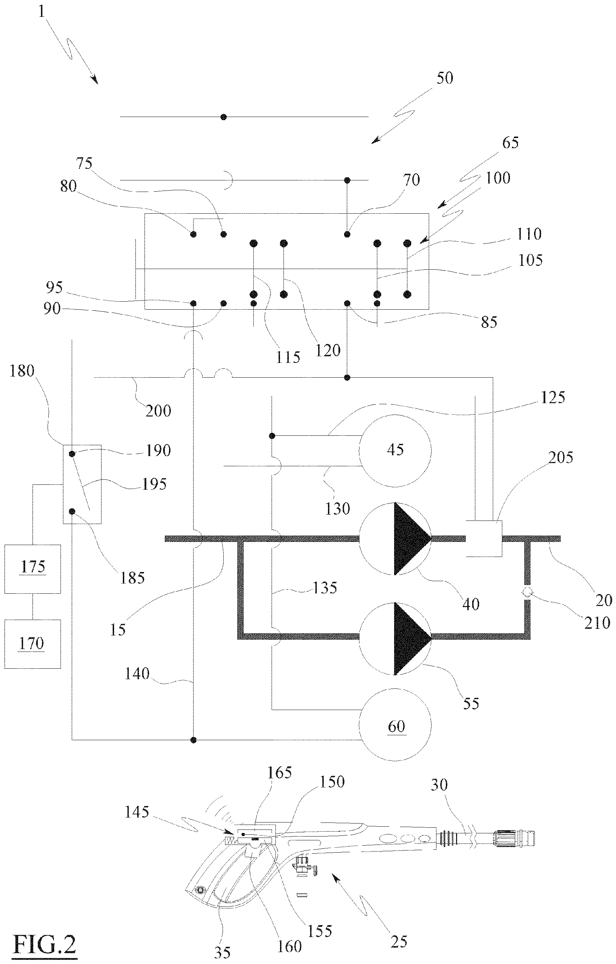

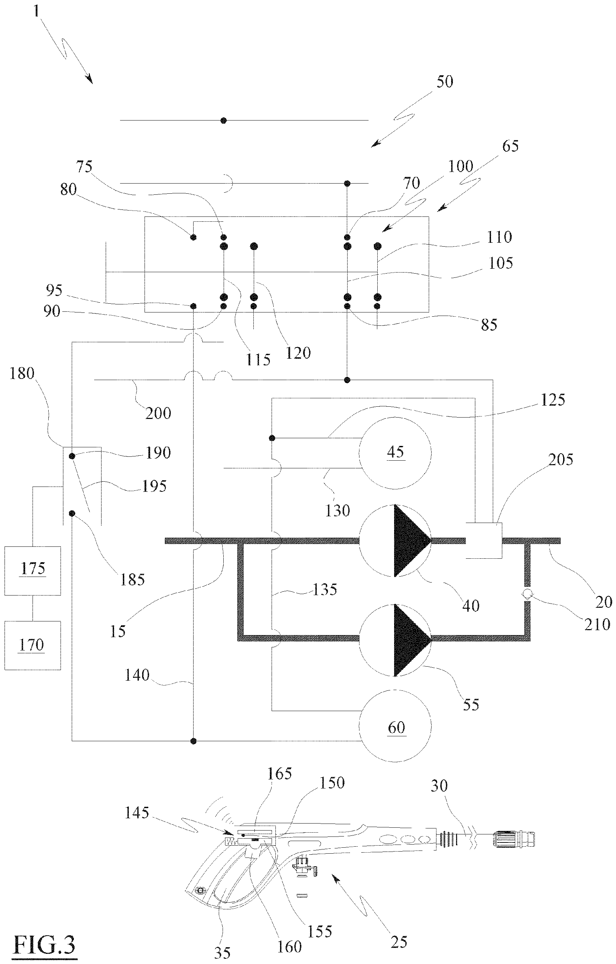

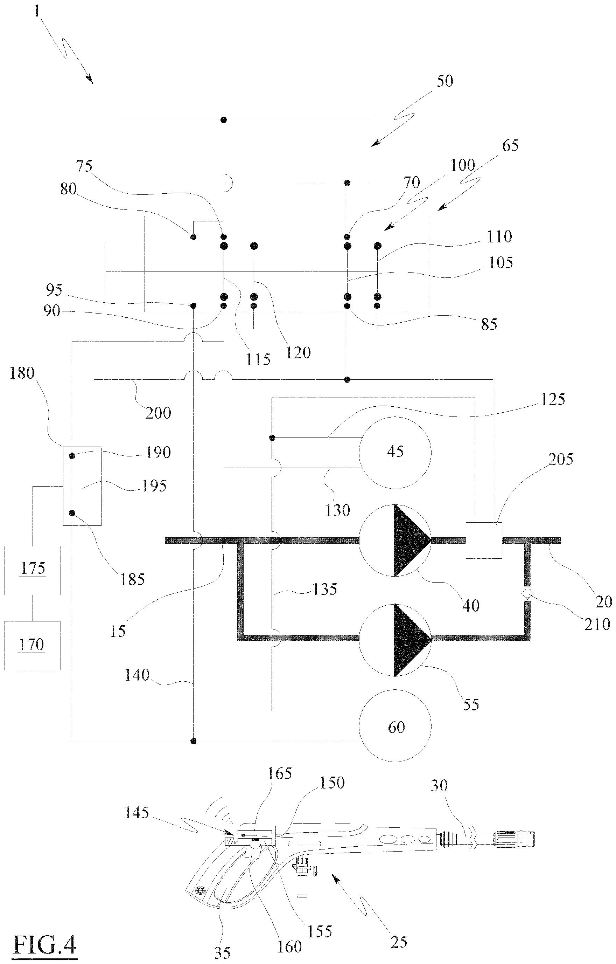

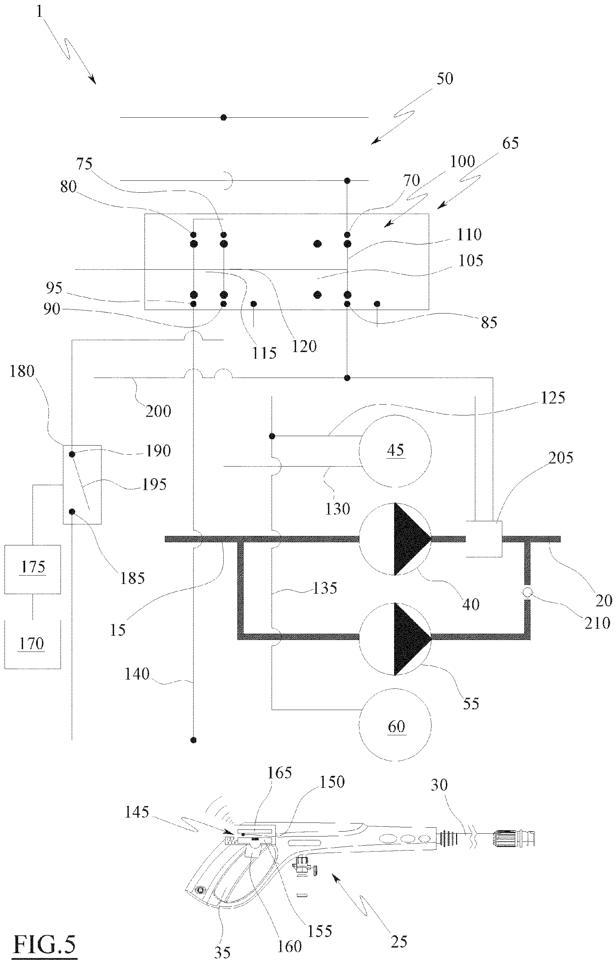

In a first embodiment of the invention (illustrated in Figures 2-5), the electronic control apparatus is configured to selectively turn on or turn off the second motor when the receiver device intercepts the wireless signal indicative of the presence of the second manual selection device in the second position, only when the first manual selection device is in the second position.

In this way it is possible to start work operations at low pressure/flow rate and then decide whether to increase it.

In this embodiment, another aspect of the invention provides that the electronic control apparatus can be configured, only when the first selection device is in the third position, to keep both of the motors turned on when the receiver device intercepts the wireless signal indicative of the switching of the second manual selection device from the first position to the second position.

The pressure washer thus configured prevents unwanted pressure drops due to accidental switching of the second selection device when the user has decided at the start that he wants the maximum pressure/flow rate available.

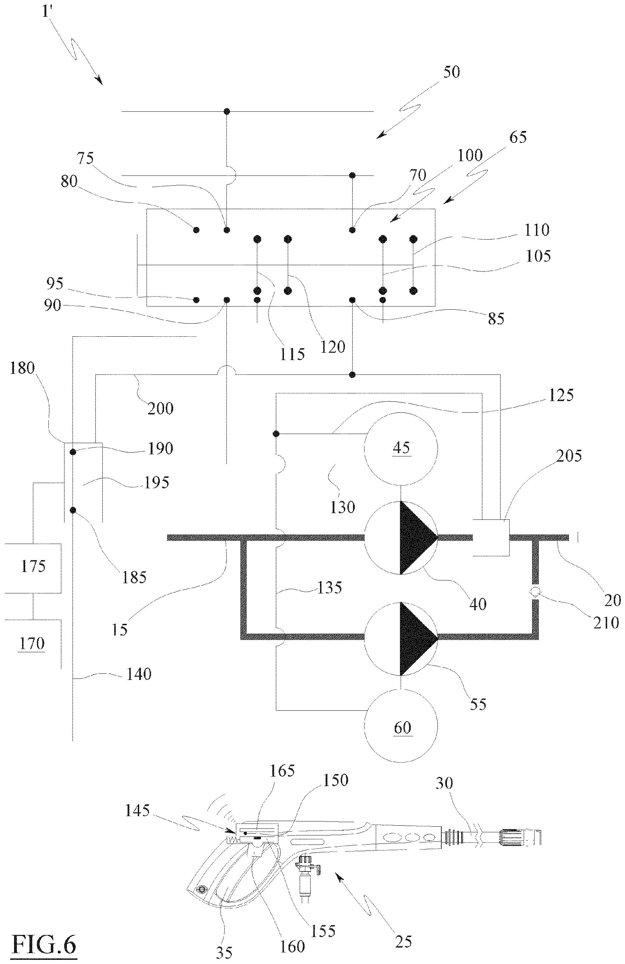

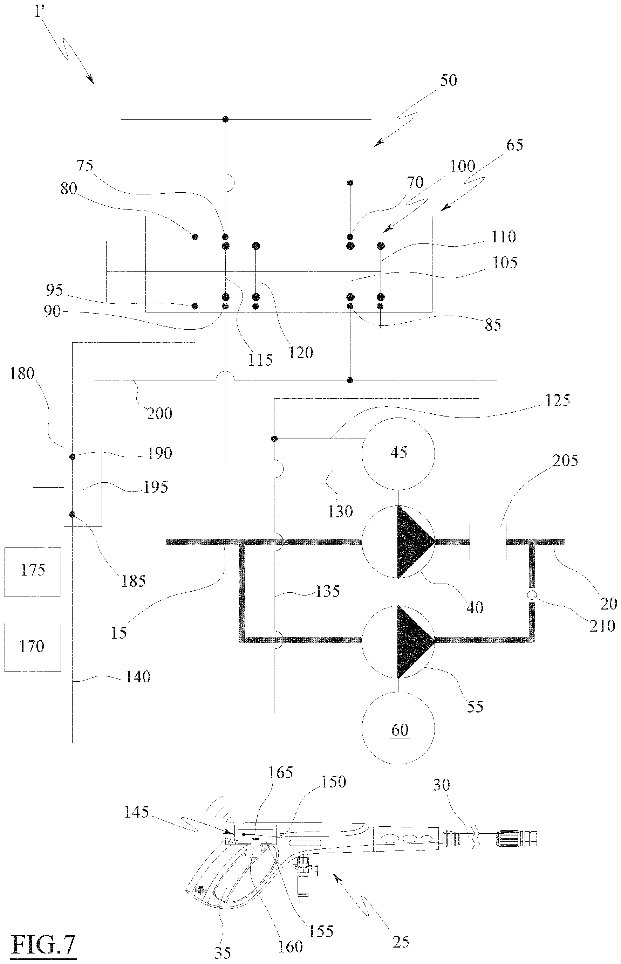

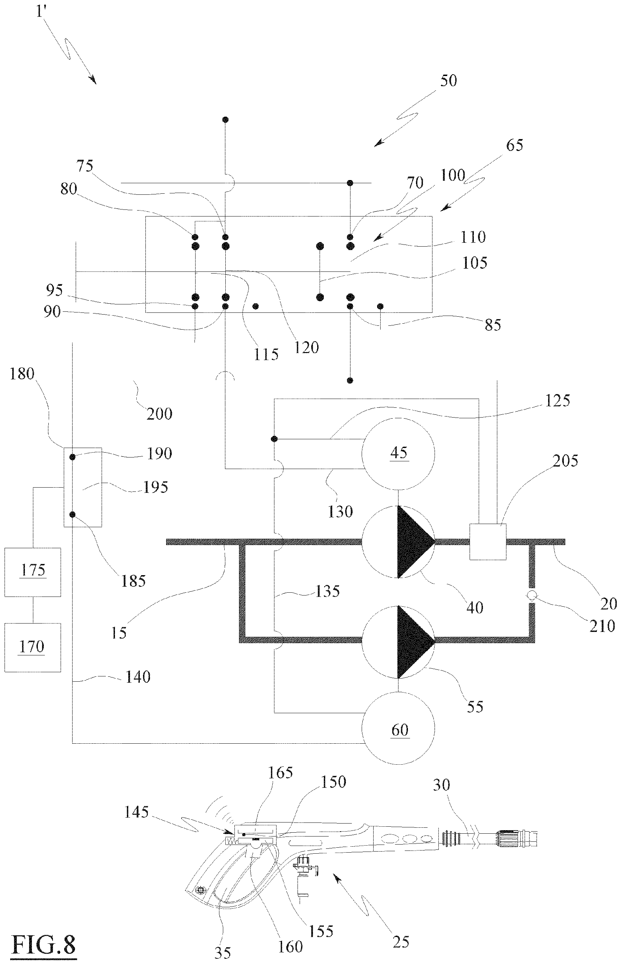

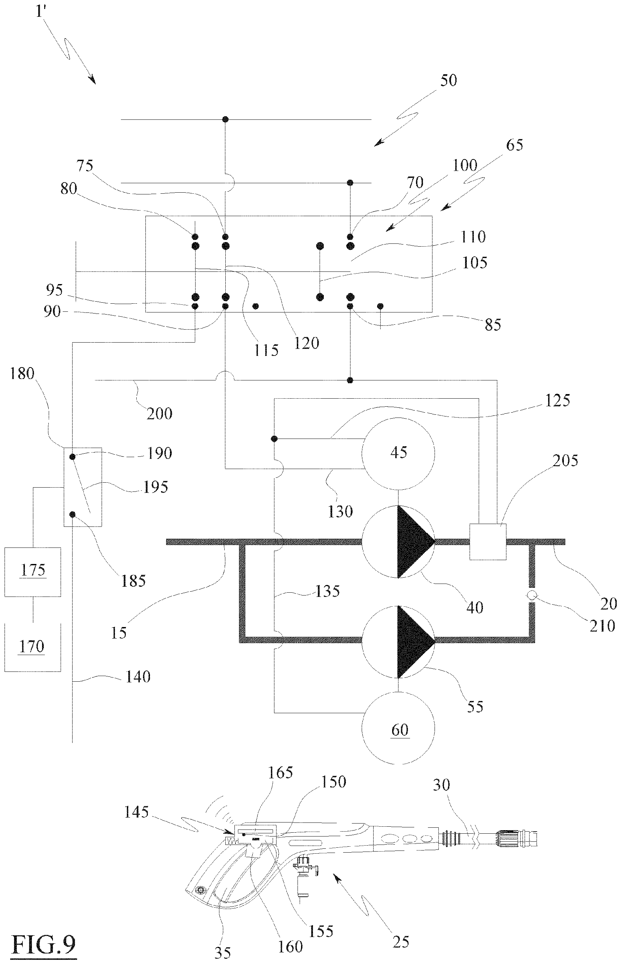

In a second embodiment of the invention (illustrated in Figures 6-9), the electronic control unit is configured to selectively turn on and turn off the second motor when the receiver device intercepts the wireless signal indicative of the presence of the second manual selection device in the second position, only when the first manual selection device is in the third position.

In this way it is possible to start work operations at high pressure/flow rate and then decide whether to decrease it.

In this embodiment, another aspect of the invention provides that the electronic control apparatus can be configured, only when the first selection device is in the second position, to keep the first motor turned on and the second motor turned off when the receiver device intercepts the wireless signal indicative of the switching of the second manual selection device from the first position to the second position. The pressure washer thus configured prevents unwanted pressure increases due to accidental switching of the second selection device when the user has decided at the start not to want or need the maximum pressure/flow rate available.

In both embodiments, the transmitter device can be configured to emit the wireless signal for a predetermined time period, for example only for a predetermined time period.

In this way it is possible to reduce the energy consumption, compared to a continuous communication of the switching of the second manual selection device, and therefore to increase the time period lapsed before it is necessary to replace a battery that powers the transmitter and which is housed in the dispensing gun.

Furthermore, again in both embodiments, the second manual selection device can be configured to automatically switch from the second position to the first position when it is not actuated.

In this way, the pressure washer is particularly usable and intuitive, since the gesture for carrying out the switching is always the same, so the user does not have to remember directions of actuation corresponding to corresponding operating conditions.

Still in both embodiments, the pressure washer can comprise a single power supply control apparatus of the first electric motor and of the second electric motor, configured to electrically power supply the first electric motor and the second electric motor so that they rotate, when fully operational, at a single preset rotation speed.

In this way, the pressure washer is particularly robust and resistant, as it is devoid of complex and/or delicate electronic components (for example, such as those required in the case of PWM modulation, pulse modulation width), but at the same time it is versatile in use providing a convenient variation of the dispensed flow rate/pressure.

### BRIEF DESCRIPTION OF THE DRAWINGS

Further features and advantages of the invention will be more apparent after reading the following description provided by way of non-limiting example, with the aid of the accompanying drawings.

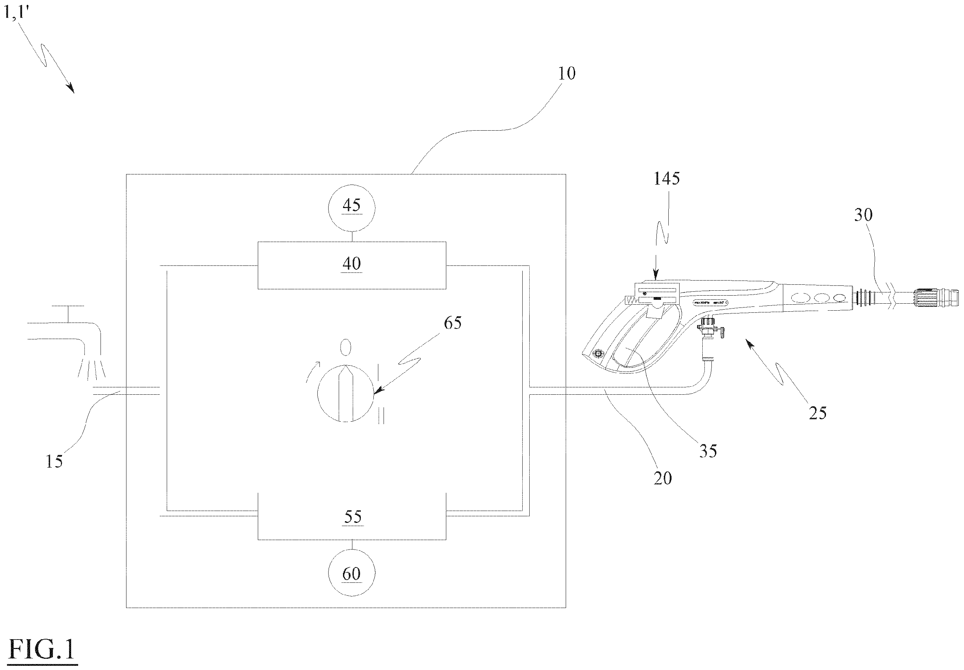

Figure 1 is a schematic view of the pressure washer according to the invention.
Figure 2 is a schematic view of a first embodiment of the pressure washer of Figure 1, illustrated in an operating condition in which a first electric motor and a second electric motor of the pressure washer are turned off.
Figure 3 is a schematic view of the pressure washer of Figure 2, illustrated in an operating condition in which the first electric motor is turned on and the second electric motor is turned off.
Figure 4 is a schematic view of the pressure washer of Figure 2, illustrated in an operating condition in which the first electric motor and the second electric motor are turned on.
Figure 5 is a schematic view of the pressure washer of Figure 2, illustrated in an operating condition in which the first electric motor and the second electric motor are turned on.
Figure 6 is a schematic view of a second embodiment of the pressure washer of Figure 1, illustrated in an operating condition in which a first electric motor and a second electric motor of the pressure washer are turned off.
Figure 7 is a schematic view of the pressure washer of Figure 6, illustrated in an operating condition in which the first electric motor is turned on and the second electric motor is turned off.
Figure 8 is a schematic view of the pressure washer of Figure 6, illustrated in an operating condition in which the first electric motor and the second electric motor are turned on.
Figure 9 is a schematic view of the pressure washer of Figure 6, illustrated in an operating condition in which the first electric motor is turned on and the second electric motor is turned off.

### DETAILED DESCRIPTION

With particular reference to these figures, the reference numeral 1 generally indicates a pressure washer, or a high pressure washing device.

The pressure washer 1,1' comprises a box-like casing 10, for example made of plastic material, to which a handle and/or wheels (not illustrated) are preferably associated for moving the pressure washer.

The pressure washer comprises an inlet duct 15 of the fluid to be pressurised, for example a single inlet duct 15 of the fluid to be pressurised, adapted to be connected to a source of fluid to be pressurised, for example a tank or a water network.

This inlet duct is at least partially contained inside the casing 10.

The pressure washer 1,1' also comprises a delivery duct 20 of the pressurised fluid, for example a single delivery duct 20 of the pressurised fluid, and a dispensing gun 25 to which said delivery duct is fluidically connected, for example by means of a flexible tubing. The delivery duct 20 is for example at least partially contained in the casing 10.

The dispensing gun 25 comprises a body equipped with a handle to which, for example, a dispensing wand 30 is associated in a removable way, which is equipped at one free end thereof with a dispensing nozzle. Any other cleaning tool can be associated to the dispensing gun, as an alternative to the wand, such as a rotating brush.

The dispensing gun 25 can comprise a trigger 35 movable between a first position, in which the dispensing gun does not dispense pressurised fluid, for example through the wand and a second position, in which the dispensing gun dispenses the pressurised fluid, for example through the wand. In particular, the trigger 35 is placed at the handle and actuates a tap between a first position, in which it allows the flow of the pressurised fluid from the delivery duct 20 to the dispensing nozzle, and a second position, in which it interrupts the flow of the pressurised fluid from the delivery duct 20 to the dispensing nozzle.

The pressure washer comprises a first pump 40, connected at the inlet to the inlet duct 15 and at the outlet to the delivery duct 20, preferably with a fixed displacement.

The pressure washer 1,1' comprises a first electric motor 45 configured to actuate the first pump 40. That is, the first electric motor 45 is mechanically connected to the first pump 40 to actuate it so as to pressurise the fluid coming from the inlet duct. Overall, the first electric motor 45 and the first pump 40 form a first motor pump of the pressure washer.

The first electric motor can be, for example only, turned on or turned off, and when it is turned on it actuates the first pump at a preset actuation speed for it to pressurise the fluid.

The first electric motor 45 is adapted to be electrically connected to an electric energy source 50. This electric energy source 50 comprises a pole with greater electric potential and a pole with lower electric potential. If the first motor is three-phase, the electric energy source 50 must also comprise a neutral electric pole.

The electric energy source 50 can be an electrical connection cable adapted to be connected to the electrical distribution network and/or a battery, for example housed inside the casing 10.

In particular, the first electric motor 45 can be actuated between a first condition, in which it is turned on, i.e. in which it is electrically powered by the electric energy source 50, or in other words still in which it is electrically connected both to the pole with greater electric potential and to the pole with lower electric potential of the electric energy source, and a second condition, in which it is turned off, i.e. in which it is not electrically powered by the electric energy source 50, or in other words still in which it is not electrically connected both to the greater potential pole and to the lower potential pole and no electric current flows in the first motor.

The pressure washer 1,1' comprises a second pump 55, connected at the inlet to the inlet duct 15 and at the outlet to the delivery duct 20 in parallel with respect to the first pump 40. In particular, the inlet duct 15 branches into a first duct connected to the first pump 40 and a second duct connected to the second pump, and similarly the delivery duct comprises a first duct connected to the first pump 40 and a second duct connected to the second pump which, downstream of said pumps with respect to the direction of flow of the pressurised fluid, join into a single duct which is in communication with the dispensing gun. The second pump 55 is preferably with fixed displacement.

The pressure washer 1,1' comprises a second electric motor 60 configured to actuate the second pump 55. That is, the second electric motor 60 is mechanically connected to the second pump 55 to actuate it so as to pressurise the fluid coming from the inlet duct. Overall, the second electric motor 60 and the second pump 55 form a second motor pump of the pressure washer.

The second electric motor 60 is mechanically independent from the first electric motor and is preferably the same as it.

The second electric motor 60 can be, for example only, turned on or turned off, and when it is turned on it actuates the second pump for it to pressurise the fluid.

The second electric motor 60 is adapted to be electrically connected to the electric energy source 50.

In particular, the second electric motor 60 can be actuated between a first condition, in which it is turned on, i.e. in which it is electrically powered by the electric energy source 50, or in other words still in which it is electrically connected both to the pole with greater electric potential and to the pole with lower electric potential of the electric energy source, and a second condition, in which it is turned off, i.e. in which it is not electrically powered by the electric energy source 50, or in other words still in which it is not electrically connected both to the greater potential pole and to the lower potential pole and no electric current flows in the first motor.

The pressure washer 1,1', as will be described in more detail below, is configured so that the first electric motor and the second electric motor rotate, when fully operational, at a single preset rotation speed.

In other words, the pressure washer 1,1' does not comprise devices for controlling the electric motors in PWM (pulse width modulation).

The pressure washer 1,1' comprises a first manual-type selection device that can be actuated in three positions: a first position, in which the first electric motor 45 and the second electric motor 60 are both turned off, i.e. they are each in the respective second condition, a second position in which only the first electric motor 45 is turned on, i.e. it is in its respective first condition, and the second electric motor 60 is turned off, i.e. it is in its respective second condition, and a third position in in which the first electric motor 45 and the second electric motor 60 are both turned on, i.e. they are both in the respective first condition.

For example, the first selection device can only be actuated in said three positions.

It should be noted that "manual type" means that it can be activated manually, preferably it can only be activated manually by an operator.

The first electric motor 45 and the second electric motor 60 are electrically connected to the electric energy source 50 by interposition of the first selection device.

The first selection device is connected, for example hooked, to the casing 10, in particular in such a way as to be accessible externally to the casing. For example, the first selection device is the only manual control device of the electric motors of the pressure washer associated with the casing 10.

In the illustrated embodiment, the first selection device comprises, that is consists of, a switch 65 configured to be stably positioned in the three positions described above. Said switch 65 comprises a selection body which can be contacted directly by the user, for example a knob, for selecting the positions.

Said knob is rotatably associated with a portion of the casing 10 and protrudes externally therefrom (with respect to a compartment in which the motors and the pumps are housed).

The switch can comprise a plurality of inlet contacts, of which a first electrical contact 70, a second electrical contact 75 and a third electrical contact 80.

The first electrical contact 70 is connected to the pole with lower electric potential of the electric energy source, the second electrical contact 75 and the third electrical contact 80 are connected, in parallel one another to the pole with greater electric potential of the electric energy source 50 (and are therefore independent from the first electrical contact). The switch then comprises a plurality of outlet contacts, of which a first electrical contact 85, a second electrical contact 90 and a third electrical contact 95, independent from one another.

The switch also comprises an electric selector 100, for example moved by the selection body, which is configured so that when the first selection device is in the first position, the inlet contacts are all electrically isolated from the outlet contacts.

The electrical selector 100 comprises a first electrical connector 105 shaped and positioned to electrically connect the first electrical contact 70 of the plurality of inlet contacts only with the first electrical contact 85 of the plurality of outlet contacts only when the first selection device is in the second position.

The electrical selector 100 comprises a second electrical contact 110 shaped and positioned to electrically connect the first electrical contact 70 of the plurality of inlet contacts only with the first electrical contact 85 of the plurality of outlet contacts only when the first selection device is in the third position.

The electrical selector 100 comprises a third electrical contact 115 shaped and positioned to electrically connect the second electrical contact 75 of the plurality of inlet contacts only with the second electrical contact 90 of the plurality of outlet contacts only when the first selection device is in the second position, and to electrically connect the third electrical contact 80 of the plurality of inlet contacts only with the third electrical contact 95 of the plurality of outlet contacts only when the first selection device is in the third position.

Furthermore, the electrical selector 100 comprises a fourth electrical contact 120 shaped and positioned to electrically connect the second electrical contact 75 of the plurality of inlet contacts only with the second electrical contact 90 of the plurality of outlet contacts only when the first selection device it is in the second position.

However, it is not excluded that in an alternative embodiment not illustrated the first manual selection device may comprise a microprocessor configured to selectively turn on and turn off the motors and a control interface configured to actuate the microprocessor.

The pressure washer 1,1' comprises a main power supply line which connects the electric energy source 50 with the plurality of inlet contacts. In particular, the main electric power supply line comprises a first cable which connects the pole with lower electric potential of the electric energy source 50 to the first electrical contact 70 of the plurality of inlet contacts, and a second cable which connects the pole with greater electric potential to the second electrical contact 75 and to the third electrical contact 80 of the plurality of inlet contacts, in parallel one another.

The pressure washer 1,1' comprises a first electric power supply line configured to electrically power the first electric motor 45, which is equipped with a first electric power supply cable 125 and a second power supply cable 130 which electrically connect the first selection device to the first motor.

In particular, the first cable 125 at one end is electrically connected to the first electrical contact 85 of the plurality of electrical outlet contacts and at an opposite end it is connected to the first electric motor 45, and the second cable 130 at one end is electrically connected to the second electrical contact 90 of the plurality of electrical outlet contacts and at an opposite end it is connected to the first electric motor.

In this way, when the first selection device is in the second or third position, the first cable 125 is thus connected by means of the first electrical connector 105 or the second electrical connector 110 to the electric energy source 50, that is to the pole with lower electric potential of the electric energy source 50, and the second cable 130 is connected by means of the third electrical connector 115 or the fourth electrical connector 120 to the electric energy source 50, that is to the pole with greater electric potential of the electric energy source 50. The connections relate to the illustrated embodiment, an inversion of the poles of the electric energy source 50 does not involve substantial changes.

The pressure washer 1,1' also comprises a second electric power supply line configured to electrically power the second electric motor 60, which is equipped with a first electric power supply cable 135 and a second power supply cable 140 which electrically connect the first selection device to the second electric motor 60.

In particular, the first cable 135 at one end is electrically connected to the first electrical contact 85 of the plurality of electrical outlet contacts and at an opposite end it is connected to the second electric motor 60, and the second cable 140 at one end is electrically connected to the third electrical contact 95 of the plurality of electrical outlet contacts and at an opposite end it is connected to the second electric motor 60.

In this way, when the first selection device is in the third position, the first cable 135 is thus connected by means of the second electrical connector 110 to the electric energy source 50, that is to the pole with lower electric potential of the electric energy source 50, and the second cable 140 is connected by means of the fourth electrical connector 120 to the electric energy source 50, that is to the pole with greater electric potential of the electric energy source 50. The connections relate to the illustrated embodiment, an inversion of the poles of the electric energy source 50 does not involve substantial changes. In the illustrated embodiment, the pressure washer comprises a common connection cable directly connected to the first electrical contact 85 of the plurality of outlet contacts and from which the first cable 125 of the power supply line of the first electric motor 45 and the first cable 135 of the power supply line of the second electric motor 60 branch off.

The pressure washer 1,1' comprises a second manual selection device associated with the dispensing gun, for example fixed to the dispensing gun 25, and movable between a first position and a second position.

In the illustrated embodiment, the second manual selection device is independent from the trigger 35.

The second manual selection device comprises, for example only, a switch 145 movable between the first position and the second position, and for example configured to automatically return to the first position when it is not actuated.

In the first position the switch 145 is open, that is, it prevents a passage of current through itself, and in the second position it is closed, that is, it allows a passage of current through itself.

In the illustrated embodiment, the switch comprises a reed envelope 150 and a magnetic body 155 which can be actuated in a direction away and closer to said envelope. For example, in order to move the magnetic body closer to the reed envelope it is necessary to overcome the force of an elastic element of the switch.

The first position of the switch 145 corresponds to when the distance of the magnetic body 155 from the reed envelope 150 is maximum, the second position of the switch 145 corresponds to when the distance of the magnetic body 155 from the reed envelope 150 is minimum.

When the distance of the magnetic body 155 is minimum, a pair of lamellae of the reed envelope come into contact with one another, allowing the passage of an electric current. The switch 145 of the second manual selection device comprises a selection body adapted to be contacted directly by the user for selecting the position of the switch 145. For example, said selection body comprises a trigger 160 connected to the dispensing gun 25, preferably to the handle of the dispensing gun. In the illustrated embodiment, the trigger 160 of the second manual selection device is directly connected to the magnetic body 155 of the switch 145.

The trigger 160 can be favourably positioned on the dispensing gun next to the trigger 35 of the dispensing gun, in such a way as to facilitate the actuation thereof.

The pressure washer 1,1' comprises a transmitter device 165 associated with the dispensing gun, for example housed inside the dispensing gun 35, and operatively connected to the second manual selection device, and configured to emit a wireless signal, i.e. an electromagnetic wave, when the second manual selection device is in the second position, that is when the switch 145 of the second manual selection device is in the second position.

In detail, the transmitter device 165 is configured to emit said wireless signal only upon the passage of the second manual selection device from the first position to the second position.

In particular, the transmitter device 165 is only configured to emit said wireless signal, only when the second manual selection device is in the second position.

Furthermore, the transmitter device is configured to emit the wireless signal only for a predetermined time period starting from the moment in which the second manual selection device is in the second position.

In the illustrated embodiment, the wireless signal is sent when an electric current circulates in an electrical circuit comprising an electric energy source, for example a battery housed in the dispensing gun, the transmitter device and the switch upon the closure of the circuit due to the fact that the switch is in the second position.

The pressure washer 1,1' comprises a receiver device 170, for example housed in the casing 10, configured to intercept the wireless signal sent by the transmitter device 165 and an electronic control apparatus operatively connected to the receiver device.

In particular, the electronic control apparatus is also operatively connected, i.e. electrically connected to at least one from the power supply line of the first electric motor 45 and the power supply line of the second electric motor.

The electronic control apparatus is configured to selectively turn on and turn off the second electric motor 60, when the first manual selection device is in one, for example only one, from the second position and the third position and when the receiver device 170 intercepts the wireless signal emitted by the transmitter device 165 following the presence of the second manual selection device in the second position. Basically the electronic control apparatus is configured to turn on and turn off the second motor 60 by-passing the first manual selection device, only when the first manual selection device is in one, for example only one, from the second position and the third position and when the receiver device 170 intercepts the wireless signal emitted by the transmitter device 165 following the presence of the second manual selection device in the second position.

In particular, the control apparatus is configured, when the first manual selection device is in one, for example only one, from the second position and the third position, to turn on the second electric motor 60 when the second motor electric 60 is turned off, i.e. not powered, and the receiver device 170 intercepts the wireless signal indicative of the presence of the second manual selection device in the second position upon the switching of the second manual selection device from the first position to the second position. The control apparatus is further configured to turn off, that is interrupt the power supply to, the second electric motor 60 when both of the motors are turned on and the receiver device 170 intercepts the wireless signal indicative of the presence of the second manual selection device in the second position upon the switching of the second manual selection device from the first position to the second position.

The control apparatus is configured to keep the condition, between turned on and off, of the first electric motor 45 determined by the first manual selection device, irrespective of whether the receiver device intercepts the wireless signal indicative of the presence of the second manual selection device in the second position.

In particular, the electronic control apparatus is configured, when the first selection device is in the other position between the second position and the third position, to keep the first electric motor 45 and the second electric motor 60 in the operating condition between turned on and off, determined by the first selection device irrespective of whether the receiver device intercepts the predetermined wireless signal indicative of the presence of the second manual selection device in the second position.

The electronic control apparatus comprises an electronic control unit 175 operatively connected to the receiver device 170, and a switch 180 operatively connected to the electronic control unit 175 and able to be actuated, by said electronic control unit, upon receiving the wireless signal from the transmitter device, between a first position, in which the switch is closed and allows the second electric motor 60 to be turned on, and a second position, in which the switch is open and prevents the second electric motor 60 from being turned on.

This switch 180 comprises a first electrical connector 185, a second electrical connector 190 and an electrically conductive connection element 195 able to be actuated between a first position, in which it allows the passage of an electric current between the first electrical connector 185 and the second electrical connector 190, and a second position, in which it prevents the passage of an electric current between the first electrical connector 185 and the second electrical connector 190.

The first electrical connector 185 is electrically connected to the electric power supply line of the second electric motor 60, for example to the second cable 140 of said electric power supply line.

The switch 180 further comprises a reference cable 200 connected to at least one from the first cable of the first motor and the first cable of the second motor, for example upstream of a pressure limiting device, as will be better described below.

In the embodiment of the pressure washer indicated as 1 and illustrated in Figures 2 to 5, the electronic control apparatus is configured to selectively turn on or turn off the second electric motor 60 when the receiver device 170 intercepts the wireless signal indicative of the presence of the second manual selection device in the second position, only when the first manual selection device is in the second position.

In particular, in this embodiment the switch 145 of the electronic control apparatus is normally in the second position, i.e. in an undisturbed condition in which it is not actuated/powered it tends to move autonomously to the second position.

In the embodiment of Figures 2-5, the electronic control apparatus is configured, only when the first selection device is in the third position, to keep both of the motors 45,60 turned on even when the receiver device intercepts the wireless signal indicative of the switching of the second manual selection device from the first position to the second position.

In particular, in the pressure washer 1 the switch 180 of the electronic control apparatus is configured so that the first electrical connector 185 is directly electrically connected to the second cable 140 of the power supply line of the second electric motor 60 and the second electrical connector 190 is directly electrically connected to the second cable 130 of the electric power supply line of the first motor.

In practice, the switch can act as an electrical bridge between the second cable 140 of the power supply line of the second electric motor 60 and the second cable 130 of the electric power supply line of the first motor 45.

In the embodiment of the pressure washer indicated as 1' and illustrated in Figures 6 to 9, the electronic control apparatus is configured to selectively turn on or turn off the second electric motor 60, when the receiver device 170 intercepts the wireless signal indicative of the presence of the second manual selection device in the second position, only when the first manual selection device is in the third position.

In particular, in this embodiment the switch 145 of the electronic control apparatus is normally in the first position, i.e. in an undisturbed condition in which it is not actuated/powered it tends to move autonomously to the first position.

In the embodiment of Figures 6-9, the electronic control apparatus is configured, only when the first selection device is in the second position, to keep the second electric motor 60 turned off even when the receiver device intercepts the wireless signal indicative of the switching of the second manual selection device from the first position to the second position.

In particular, in the pressure washer 1' the switch 180 of the electronic control apparatus interrupts the electrical continuity of the second cable 140 of the power supply line of the second electric motor 60. In practice, the first electrical connector 185, the electrical connector element 195 and the second connector 190 are located in series along the second cable 140 which is therefore divided into a first portion that runs from the first connector to the second motor and a second portion that runs from the second connector to the third electrical contact of the plurality of outlet electrical contacts.

In the illustrated embodiments, the pressure washer 1,1' comprises a single power supply control apparatus of the first electric motor 45 and of the second electric motor 60, configured to electrically power supply the first electric motor 45 and the second electric motor 60 so that they rotate, when fully operational, at a single preset rotation speed.

This power supply control apparatus is equipped, for example only, with the first manual selection device, with the second manual selection device, with the main power supply line of the pressure washer directly connected to the electric energy source, and with the electronic control device.

In this way the pressure washer is particularly robust and resistant, as it is devoid of complex and/or delicate electronic components, but at the same time versatile in use by providing a convenient variation of the dispensed flow rate/pressure.

As previously anticipated, the pressure washer comprises a pressure limiting device 205 adapted to detect the pressure at the delivery duct and configured to interrupt the electric power supply of the motors when it detects a pressure greater than a predetermined threshold value.

In particular, said pressure limiting device 205 is configured to interrupt the electrical continuity of the first cable 125 of the electric power supply line of the first electric motor and of the first cable 135 of the electric power supply line of the second electric motor.

In the illustrated embodiment, the pressure limiting device 205 comprises a switch located on the connection cable from which the first cable 125 of the electric power supply line of the first electric motor and the first cable 135 of the electric power supply line of the second electric motor branch off.

The pressure washer also comprises a non-return valve 210 placed on a portion of duct directly interposed between the second pump 55 and the delivery duct 20.

The operation of the pressure washer according to the invention is as follows.

In the case of the embodiment illustrated in figures 2-5, when the user positions the first selection device in the second position, in the event that he decides to need a greater flow rate/pressure, he can actuate the second selection device on the wand, for example by comfortably acting on the trigger 160, from the first position to the second position. As a consequence of this action, the electronic control apparatus will turn on the second motor. This is because by means of the switch 180 it is possible to connect the electric energy source 50 to the second cable of the electric power supply line of the second motor by connecting it to the second cable of the electric power supply line of the first motor, which, when the first manual selection device is in the second position, is connected to the electric energy source 50 (in particular to the pole with lower electric potential). Since the first cable of the power supply line of the second motor is connected to the electric energy source 50 when the first manual selection device is in the second position, the second electric motor turns on.

In the event that the operator needs a reduction in the flow rate/pressure compared to that supplied by the two motors together, it is sufficient for him to actuate the second selection device again from the first position to the second position. As a consequence of this action, the electronic control apparatus will turn off the second motor. This is because by opening the switch 180, the second motor is disconnected from the second cable of the electric power supply line of the first motor, and the second electric motor is therefore disconnected from the pole with greater electric potential.

Still in the embodiment of Figures 2-5, if the user has positioned the first selection device in the third position, the actuation of the second selection device does not cause any variation in the electric power supply of the motors, since each electric motor is already powered by the respective power supply line and the opening and closure of the circuit breaker 180 has no influence on the power supply of the motors.

In the case of the embodiment illustrated in figures 6-9, when the user positions the first selection device in the third position, in the event that he decides to need a lower flow rate/pressure, he can actuate the second selection device on the wand, for example by comfortably acting on the trigger 160, from the first position to the second position. As a consequence of this action, the electronic control apparatus will turn off the second motor. This is because by means of the switch 180 it is possible to interrupt the electrical continuity of the second cable of the electric power supply line of the second motor, which therefore is isolated from the pole with greater electric potential of the electric energy source 50.

Again in the embodiment of Figures 6-9, if the user has positioned the first selection device in the second position, the actuation of the second selection device does not cause any variation in the electric power supply of the motors, since the cable of the power supply line on which the switch 180 is placed, in said second position, is isolated from the electric energy source 50.

In practice, the materials used, as well as the contingent shapes and sizes, can be whatever according to the requirements without for this reason departing from the scope of protection of the following claims.

## Claims

1. Pressure washer (1) comprising:
- a first pump (40) and a first electric motor (45) configured to actuate the first pump,
- a second pump (55) and a second electric motor (60) configured to actuate the second pump, where the first pump and the second pump are connected, in parallel to one another, to an inlet duct (15) of a liquid to be pressurised and to a delivery duct (20) of the pressurised liquid,
- a dispensing gun (25) of the pressurised liquid fluidically connected to the delivery duct (20) and comprising a trigger (35) movable between a first position, in which the dispensing gun does not dispense pressurised fluid, and a second position, in which the dispensing gun dispenses pressurised fluid,
- a first manual selection device (65) that can be actuated in three positions: a first position, in which both of the electric motors (45,60) are turned off, a second position in which only the first electric motor (45) is turned on and the second electric motor (60) is turned off, and a third position in which the first electric motor (45) and the second electric motor (60) are both turned on, **characterised by**:
- a second manual selection device (145) associated with the dispensing gun (25) and able to be actuated between a first position and a second position,
- a transmitter device (165) associated with the dispensing gun (25), operatively connected to the second manual selection device (145), and configured to emit a predetermined wireless signal when the second manual selection device (145) is in the second position,
- a receiver device (170),
- an electronic control apparatus (175,180) operatively connected to the receiver device (170), and
wherein the electronic control apparatus (175,180) is configured, only when the first manual selection device (65) is in the second position, to selectively turn on or turn off the second motor (60), by-passing the first manual selection device, when the receiver device (170) intercepts the predetermined wireless signal indicative of the presence of the second manual selection device (145) in the second position.

2. Pressure washer (1,) according to claim 1, wherein the electronic control apparatus (175,180) is configured, only when the first manual selection device (65) is in the the third position, to keep on the first electric motor (45) and the second electric motor (60) irrespective of whether the receiver device (170) intercepts the predetermined wireless signal indicative of the presence of the second manual selection device (145) in the second position.

3. Pressure washer (1) according to any one of the previous claims, wherein the electronic control apparatus comprises an electronic control unit (175) operatively connected to the receiver device (170), and a switch (180) operatively connected to the electronic control unit and able to be actuated by said electronic control unit upon receiving the signal from the second manual selection device (145) between a first position, in which the switch (180) is closed and allows the second motor (60) to be turned on, and a second position, in which the switch (180) is open and prevents the second motor (60) from being turned on.

4. Pressure washer (1) according to claim 3, wherein the switch (180) comprises a first electrical connector (185), a second electrical connector (190) and an electrically conductive connection element (195) able to be actuated between a first position, in which it allows the passage of an electric current between the first electrical connector and the second electrical connector, and a second position, in which it prevents the passage of an electric current between the first electrical connector and the second electrical connector.

5. Pressure washer (1) according to claim 1, comprising an electric power supply line of the first motor equipped with a first electric power supply cable (125) and a second power supply cable (130) that electrically connect the first selection device (65) to the first motor (45) and are independent from one another, and an electric power supply line of the second motor equipped with a first electric power supply cable (135) and a second electric power supply cable (140) that electrically connects the first selection device (65) to the second motor (60) and are independent from one another, and in which the switch (180) of the electronic control apparatus has the first electrical connector (185) electrically connected to the second power supply cable (140) of the second motor (60) and the second electrical connector (190) is electrically connected to the second cable (130) of the first motor (45).

6. Pressure washer (1') comprising:
- a first pump (40) and a first electric motor (45) configured to actuate the first pump,
- a second pump (55) and a second electric motor (60) configured to actuate the second pump, where the first pump and the second pump are connected, in parallel to one another, to an inlet duct (15) of a liquid to be pressurised and to a delivery duct (20) of the pressurised liquid,
- a dispensing gun (25) of the pressurised liquid fluidically connected to the delivery duct (20) and comprising a trigger (35) movable between a first position, in which the dispensing gun does not dispense pressurised fluid, and a second position, in which the dispensing gun dispenses pressurised fluid,
- a first manual selection device (65) that can be actuated in three positions: a first position, in which both of the electric motors (45,60) are turned off, a second position in which only the first electric motor (45) is turned on and the second electric motor (60) is turned off, and a third position in which the first electric motor (45) and the second electric motor (60) are both turned on, **characterised by**:
- a second manual selection device (145) associated with the dispensing gun (25) and able to be actuated between a first position and a second position,
- a transmitter device (165) associated with the dispensing gun (25), operatively connected to the second manual selection device (145), and configured to emit a predetermined wireless signal when the second manual selection device (145) is in the second position,
- a receiver device (170),
- an electronic control apparatus (175,180) operatively connected to the receiver device (170), and
wherein the electronic control apparatus (175,180) is configured, only when the first manual selection device (65) is the third position, to selectively turn on or turn off the second motor (60), by-passing the first manual selection device, when the receiver device (170) intercepts the predetermined wireless signal indicative of the presence of the second manual selection device (145) in the second position.

7. Pressure washer (1') according to claim 6, wherein the electronic control apparatus (175,180) is configured, only when the first selection device (65) is in the second position, to keep the first motor (45) turned on and the second motor (60) turned off when the receiver device (170) intercepts the predetermined wireless signal indicative of the switching of the second manual selection device (145) from the first position to the second position.

8. Pressure washer (1,1') according to claim 1 or 6, wherein the transmitter device (170) is configured to emit the predetermined wireless signal for a predetermined time period.

9. Pressure washer (1,1') according to claim 1 or 6, wherein the second manual selection device (145) is configured to automatically switch from the second position to the first position when it is not actuated.

## Patentansprüche

1. Hochdruckreiniger (1), umfassend:
- eine erste Pumpe (40) und einen ersten Elektromotor (45), der zum Betätigen der ersten Pumpe konfiguriert ist,
- eine zweite Pumpe (55) und einen zweiten Elektromotor (60), der konfiguriert ist, um die zweite Pumpe zu betätigen, wobei die erste Pumpe und die zweite Pumpe parallel zueinander mit einer Einlassleitung (15) für eine unter Druck zu setzende Flüssigkeit und mit einer Zufuhrleitung (20) für die unter Druck stehende Flüssigkeit verbunden sind,
- eine Ausgabepistole (25) für die unter Druck stehende Flüssigkeit, die fluidisch mit der Zufuhrleitung (20) verbunden ist und einen Abzug (35) umfasst, der zwischen einer ersten Position, in der die Ausgabepistole keine unter Druck stehende Flüssigkeit ausgibt, und einer zweiten Position, in der die Ausgabepistole unter Druck stehende Flüssigkeit ausgibt, beweglich ist,
- eine erste manuelle Wählvorrichtung (65), die in drei Positionen betätigt werden kann: eine erste Position, in der beide Elektromotoren (45, 60) ausgeschaltet sind, eine zweite Position, in der nur der erste Elektromotor (45) eingeschaltet ist und der zweite Elektromotor (60) ausgeschaltet ist, und eine dritte Position, in der der erste Elektromotor (45) und der zweite Elektromotor (60) beide eingeschaltet sind, **gekennzeichnet durch**:
- eine zweite manuelle Wählvorrichtung (145), die mit der Ausgabepistole (25) assoziiert ist und in der Lage ist, zwischen einer ersten und einer zweiten Position betätigt zu werden,
- eine Sendevorrichtung (165), die mit der Ausgabepistole (25) assoziiert ist, funktionsfähig mit der zweiten manuellen Wählvorrichtung (145) verbunden und konfiguriert ist, um ein vorbestimmtes drahtloses Signal zu emittieren, wenn die zweite manuelle Wählvorrichtung (145) in der zweiten Position ist,
- eine Empfängervorrichtung (170),
- ein elektronisches Steuergerät (175, 180), das funktionsfähig mit der Empfängervorrichtung (170) verbunden ist, und
wobei das elektronische Steuergerät (175, 180) konfiguriert ist, um nur dann, wenn die erste manuelle Wählvorrichtung (65) in der zweiten Position ist, den zweiten Motor (60) unter Umgehung der ersten manuellen Wählvorrichtung selektiv einzuschalten oder auszuschalten, wenn die Empfängervorrichtung (170) das vorbestimmte drahtlose Signal abfängt, das indikativ für das Vorhandensein der zweiten manuellen Wählvorrichtung (145) in der zweiten Position ist.

2. Hochdruckreiniger (1) nach Anspruch 1, wobei das elektronische Steuergerät (175, 180) konfiguriert ist, um nur dann, wenn die erste manuelle Wählvorrichtung (65) in der dritten Position ist, den ersten Elektromotor (45) und den zweiten Elektromotor (60) eingeschaltet zu lassen, unabhängig davon, ob die Empfängervorrichtung (170) das vorbestimmte drahtlose Signal abfängt, das indikativ für das Vorhandensein der zweiten manuellen Wählvorrichtung (145) in der zweiten Position ist.

3. Hochdruckreiniger (1) nach einem der vorherigen Ansprüche, das elektronische Steuergerät umfassend eine elektronische Steuereinheit (175), die funktionsfähig mit der Empfängervorrichtung (170) verbunden ist, und einen Schalter (180), der funktionsfähig mit der elektronischen Steuereinheit verbunden ist und in der Lage ist, bei Empfangen des Signals von der zweiten manuellen Wählvorrichtung (145) durch die elektronische Steuereinheit zwischen einer ersten Position, in der der Schalter (180) geschlossen ist und ein Einschalten des zweiten Motors (60) ermöglicht, und einer zweiten Position, in der der Schalter (180) offen ist und ein Einschalten des zweiten Motors (60) verhindert, betätigt zu werden.

4. Hochdruckreiniger (1) nach Anspruch 3, wobei der Schalter (180) einen ersten elektrischen Verbinder (185), einen zweiten elektrischen Verbinder (190) und ein elektrisch leitendes Verbindungselement (195) umfasst, das in der Lage ist, zwischen einer ersten Position, in der es den Durchgang eines elektrischen Stroms zwischen dem ersten elektrischen Verbinder und dem zweiten elektrischen Verbinder ermöglicht, und einer zweiten Position, in der es den Durchgang eines elektrischen Stroms zwischen dem ersten elektrischen Verbinder und dem zweiten elektrischen Verbinder verhindert, betätigt zu werden.

5. Hochdruckreiniger (1) nach Anspruch 1, umfassend eine elektrische Stromversorgungsleitung des ersten Motors, die mit einem ersten elektrischen Stromversorgungskabel (125) und einem zweiten Stromversorgungskabel (130) ausgestattet ist, die die erste Wählvorrichtung (65) elektrisch mit dem ersten Motor (45) verbinden und voneinander unabhängig sind, und eine elektrische Stromversorgungsleitung des zweiten Motors, die mit einem ersten elektrischen Stromversorgungskabel (135) und einem zweiten elektrischen Stromversorgungskabel (140) ausgestattet ist, die die erste Wählvorrichtung (65) elektrisch mit dem zweiten Motor (60) verbinden und voneinander unabhängig sind, und bei der der Schalter (180) des elektronischen Steuergeräts den ersten elektrischen Verbinder (185) aufweist, der elektrisch mit dem zweiten Stromversorgungskabel (140) des zweiten Motors (60) verbunden ist, und der zweite elektrische Verbinder (190) elektrisch mit dem zweiten Kabel (130) des ersten Motors (45) verbunden ist.

6. Hochdruckreiniger (1'), umfassend:
- eine erste Pumpe (40) und einen ersten Elektromotor (45), der zum Betätigen der ersten Pumpe konfiguriert ist,
- eine zweite Pumpe (55) und einen zweiten Elektromotor (60), der konfiguriert ist, um die zweite Pumpe zu betätigen, wobei die erste Pumpe und die zweite Pumpe parallel zueinander mit einer Einlassleitung (15) für eine unter Druck zu setzende Flüssigkeit und mit einer Zufuhrleitung (20) für die unter Druck stehende Flüssigkeit verbunden sind,
- eine Ausgabepistole (25) für die unter Druck stehende Flüssigkeit, die fluidisch mit der Zufuhrleitung (20) verbunden ist und einen Abzug (35) umfasst, der zwischen einer ersten Position, in der die Ausgabepistole keine unter Druck stehende Flüssigkeit ausgibt, und einer zweiten Position, in der die Ausgabepistole unter Druck stehende Flüssigkeit ausgibt, beweglich ist,
- eine erste manuelle Wählvorrichtung (65), die in drei Positionen betätigt werden kann: eine erste Position, in der beide Elektromotoren (45, 60) ausgeschaltet sind, eine zweite Position, in der nur der erste Elektromotor (45) eingeschaltet ist und der zweite Elektromotor (60) ausgeschaltet ist, und eine dritte Position, in der der erste Elektromotor (45) und der zweite Elektromotor (60) beide eingeschaltet sind, **gekennzeichnet durch**:
- eine zweite manuelle Wählvorrichtung (145), die mit der Ausgabepistole (25) assoziiert ist und in der Lage ist, zwischen einer ersten und einer zweiten Position betätigt zu werden,
- eine Sendevorrichtung (165), die mit der Ausgabepistole (25) assoziiert ist, funktionsfähig mit der zweiten manuellen Wählvorrichtung (145) verbunden und konfiguriert ist, um ein vorbestimmtes drahtloses Signal zu emittieren, wenn die zweite manuelle Wählvorrichtung (145) in der zweiten Position ist,
- eine Empfängervorrichtung (170),
- ein elektronisches Steuergerät (175, 180), das funktionsfähig mit der Empfängervorrichtung (170) verbunden ist, und
wobei die elektronische Steuervorrichtung (175, 180) konfiguriert ist, um nur dann, wenn die erste manuelle Wählvorrichtung (65) in der dritten Position ist, den zweiten Motor (60) unter Umgehung der ersten manuellen Wählvorrichtung selektiv einzuschalten oder auszuschalten, wenn die Empfängervorrichtung (170) das vorbestimmte drahtlose Signal abfängt, das indikativ für das Vorhandensein der zweiten manuellen Wählvorrichtung (145) in der zweiten Position ist.

7. Hochdruckreiniger (1') nach Anspruch 6, wobei das elektronische Steuergerät (175, 180) konfiguriert ist, um nur dann, wenn die erste Wählvorrichtung (65) in der zweiten Position ist, den ersten Motor (45) eingeschaltet und den zweiten Motor (60) ausgeschaltet zu lassen, wenn die Empfängervorrichtung (170) das vorbestimmte drahtlose Signal abfängt, das indikativ für das Umschalten der zweiten manuellen Wählvorrichtung (145) von der ersten Position in die zweite Position ist.

8. Hochdruckreiniger (1, 1') nach Anspruch 1 oder 6, wobei die Sendevorrichtung (170) konfiguriert ist, um das vorbestimmte drahtlose Signal über eine vorbestimmte Zeitdauer zu emittieren.

9. Hochdruckreiniger (1, 1') nach Anspruch 1 oder 6, wobei die zweite manuelle Wählvorrichtung (145) konfiguriert ist, um automatisch von der zweiten Position in die erste Position zu schalten, wenn sie nicht betätigt wird.

## Revendications

1. Nettoyeur haute pression (1) comprenant :
- une première pompe (40) et un premier moteur électrique (45) configuré pour actionner la première pompe,
- une deuxième pompe (55) et un deuxième moteur électrique (60) configuré pour actionner la deuxième pompe, auquel sont connectés la première et la deuxième pompe, parallèlement l'une à l'autre, à un conduit d'admission (15) d'un liquide à pressuriser et à un conduit de refoulement (20) du liquide pressurisé,
- un pistolet distributeur (25) du liquide pressurisé relié de manière fluidique au conduit de refoulement (20) et comprenant une gâchette (35) mobile entre une première position, dans laquelle le pistolet distributeur ne distribue pas de fluide pressurisé, et une deuxième position, dans laquelle le pistolet distributeur distribue du fluide sous pression,
- un premier dispositif de sélection manuelle (65) pouvant être activé sur trois positions : une première position permettant d'arrêter les deux moteurs électriques (45, 60), une deuxième position permettant de mettre en marche le premier moteur électrique (45) et d'arrêter le deuxième moteur électrique (60), et une troisième position permettant de mettre en marche le premier moteur électrique (45) et le deuxième moteur électrique (60), **caractérisé par** :
- un deuxième dispositif de sélection manuelle (145) associé au pistolet distributeur (25) et pouvant être actionné entre une première position et une deuxième position,
- un dispositif émetteur (165) associé au pistolet distributeur (25), relié de manière opérationnelle au deuxième dispositif de sélection manuelle (145), et configuré pour émettre un signal sans fil prédéterminé lorsque le deuxième dispositif de sélection manuelle (145) est en deuxième position,
- un dispositif récepteur (170),
- un dispositif de commande électronique (175,180) relié de manière opérationnelle au dispositif récepteur (170), et
dans lequel le dispositif de commande électronique (175,180) est configuré, uniquement lorsque le premier dispositif de sélection manuelle (65) est en deuxième position, pour mettre en marche ou arrêter de manière sélective le deuxième moteur (60), en contournant le premier dispositif de sélection manuelle, lorsque le dispositif récepteur (170) intercepte le signal sans fil prédéterminé indiquant la présence du deuxième dispositif de sélection manuelle (145) en deuxième position.

2. Nettoyeur haute pression (1) selon la revendication 1, dans lequel le dispositif de commande électronique (175,180) est configuré, uniquement lorsque le premier dispositif de sélection manuelle (65) est en troisième position, pour maintenir en marche le premier moteur (45) et le deuxième moteur électrique (60), indépendamment du fait que le dispositif récepteur (170) intercepte le signal sans fil prédéterminé indiquant la présence du deuxième dispositif de sélection manuelle (145) en deuxième position.

3. Nettoyeur haute pression (1) selon l'une quelconque des revendications précédentes, dans lequel le dispositif de commande électronique comprend une unité de commande électronique (175) reliée de manière opérationnelle au dispositif récepteur (170), et un commutateur (180) relié de manière opérationnelle à l'unité de commande électronique et pouvant être actionné par ladite unité de commande électronique à la réception du signal du deuxième dispositif de sélection manuelle (145) entre une première position, dans laquelle le commutateur (180) est fermé et permet la mise en marche du deuxième moteur (60), et une deuxième position, dans laquelle le commutateur (180) est ouvert et empêche la mise en marche du deuxième moteur (60).

4. Nettoyeur haute pression (1) selon la revendication 3, dans lequel le commutateur (180) comprend un premier connecteur électrique (185), un deuxième connecteur électrique (190) et un élément de connexion électriquement conducteur (195) pouvant être actionné entre une première position, dans laquelle il permet le passage d'un courant électrique entre le premier connecteur électrique et le deuxième connecteur électrique, et une deuxième position, dans laquelle il empêche le passage d'un courant électrique entre le premier connecteur électrique et le deuxième connecteur électrique.

5. Nettoyeur haute pression (1 ) selon la revendication 1, comprenant une ligne d'alimentation électrique du premier moteur équipée d'un premier câble d'alimentation électrique (125) et d'un deuxième câble d'alimentation électrique (130) qui relient de manière électrique le premier dispositif de sélection (65) au premier moteur (45) et sont indépendants l'un de l'autre, et une ligne d'alimentation électrique du deuxième moteur équipée d'un premier câble d'alimentation électrique (135) et d'un deuxième câble d'alimentation électrique (140) qui relient de manière électrique le premier dispositif de sélection (65) au deuxième moteur (60) et qui sont indépendants l'un de l'autre, et dans laquelle le commutateur (180) du dispositif de commande électronique a le premier connecteur électrique (185) relié de manière électrique au deuxième câble d'alimentation électrique (140) du deuxième moteur (60) et le deuxième connecteur électrique (190) est relié de manière électrique au deuxième câble (130) du premier moteur (45).

6. Nettoyeur haute pression (1') comprenant :
- une première pompe (40) et un premier moteur électrique (45) configuré pour actionner la première pompe,
- une deuxième pompe (55) et un deuxième moteur électrique (60) configuré pour actionner la deuxième pompe, auquel sont connectés la première et la deuxième pompe, parallèlement l'une à l'autre, à un conduit d'admission (15) d'un liquide à pressuriser et à un conduit de refoulement (20) du liquide pressurisé,
- un pistolet distributeur (25) du liquide pressurisé relié de manière fluidique au conduit de refoulement (20) et comprenant une gâchette (35) mobile entre une première position, dans laquelle le pistolet distributeur ne distribue pas de fluide pressurisé, et une deuxième position, dans laquelle le pistolet distributeur distribue du fluide sous pression,
- un premier dispositif de sélection manuelle (65) pouvant être activé sur trois positions : une première position permettant d'arrêter les deux moteurs électriques (45, 60), une deuxième position permettant de mettre en marche le premier moteur électrique (45) et d'arrêter le deuxième moteur électrique (60), et une troisième position permettant de mettre en marche le premier moteur électrique (45) et le deuxième moteur électrique (60), **caractérisé par** :
- un deuxième dispositif de sélection manuelle (145) associé au pistolet distributeur (25) et pouvant être actionné entre une première position et une deuxième position,
- un dispositif émetteur (165) associé au pistolet distributeur (25), relié de manière opérationnelle au deuxième dispositif de sélection manuelle (145), et configuré pour émettre un signal sans fil prédéterminé lorsque le deuxième dispositif de sélection manuelle (145) est en deuxième position,
- un dispositif récepteur (170),
- un dispositif de commande électronique (175,180) relié de manière opérationnelle au dispositif récepteur (170), et
dans lequel le dispositif de commande électronique (175,180) est configuré, uniquement lorsque le premier dispositif de sélection manuelle (65) est en troisième position, pour mettre en marche ou arrêter de manière sélective le deuxième moteur (60), en contournant le premier dispositif de sélection manuelle, lorsque le dispositif récepteur (170) intercepte le signal sans fil prédéterminé indiquant la présence du deuxième dispositif de sélection manuelle (145) en deuxième position.

7. Nettoyeur haute pression (1') selon la revendication 6, dans lequel le dispositif de commande électronique (175,180) est configuré, uniquement lorsque le premier dispositif de sélection manuelle (65) est en deuxième position, pour maintenir en marche le premier moteur (45) et arrêter le deuxième moteur électrique (60) lorsque le dispositif récepteur (170) intercepte le signal sans fil prédéterminé indiquant le basculement du deuxième dispositif de sélection manuelle (145) de la première position à la deuxième position.

8. Nettoyeur haute pression (1,1') selon la revendication 1 ou 6, dans lequel le dispositif émetteur (170) est configuré pour émettre le signal sans fil prédéterminé pendant une durée prédéterminée.

9. Nettoyeur (1,1') selon la revendication 1 ou 6, dans lequel le deuxième dispositif de sélection manuelle (145) est configuré pour basculer de manière automatique de la deuxième position à la première position lorsqu'il n'est pas actionné.
